# EUROPÄISCHE PATENTSCHRIFT

(11) **EP 0 571 473 B1**
(45) Veröffentlichungstag und Bekanntmachung des Hinweises auf die Patenterteilung: **31.08.1994**
(21) Anmeldenummer: 92904904.7
(22) Anmeldetag: 21.02.1992
(51) Int. Cl.: F16M 13/00

(54) **STÜTZEINRICHTUNG FÜR EIN GERÄT**
MACHINE SUPPORTING ARRANGEMENT
INSTALLATION DE SUPPORT D'APPAREIL

(30) Priorität: 22.02.1991 DE 4105691
(43) Veröffentlichungstag der Anmeldung: 01.12.1993
(73) Patentinhaber: Siemens Nixdorf Informationssysteme Aktiengesellschaft, 33102 Paderborn (DE)
(72) Erfinder: FIETZ, Ralf-Peter, D-33106 Paderborn-Elsen (DE); KNOOP, Franz, D-33142 Büren-Steinhausen (DE)
(74) Vertreter: Fuchs, Franz-Josef, Dr.-Ing.
(86) Internationale Anmeldenummer: EP9200365
(87) Internationale Veröffentlichungsnummer: WO9214963

(56) Entgegenhaltungen:
- DE-U- 8 803 519
- GB-A- 2 185 388
- US-A- 4 368 867
- US-A- 4 872 733

## Beschreibung

Die Erfindung betrifft eine Stützeinrichtung der im Oberbegriff des Anspruches 1 genannten Art.

Moderne Geräte haben häufig aufgrund ihrer schlanken Bauweise und ihrer funktionsbedingten Massenverteilung sowie der Notwendigkeit, sie hochkant aufzustellen, nicht die erforderliche Standsicherheit. Das gilt beispielsweise für kleine Rechnereinheiten oder dergleichen, die in vielbelaufenen Büroräumen aufgestellt werden.

Es ist bereits eine Stützeinrichtung der im Oberbegriff des Anspruches 1 genannten Art vorgeschlagen worden, die im wesentlichen aus einem auf einen Standfuß aufsteckbaren Stützfuß besteht. Für die Montage dieses Stützfußes muß das Gerät angehoben oder gekippt werden, damit der Stützfuß von unten her auf den Standfuß aufgesteckt werden kann. Dieses Verfahren ist wegen des häufig großen Gewichtes der Geräte schwierig und gelegentlich nur mit Hilfsmitteln durchführbar. Insbesondere wenn die Standfüße als Rollenfüße ausgebildet sind, besteht überdies die Gefahr, daß das Gerät beim Kippen fortrutscht und nicht mehr gehalten werden kann. Ein weiterer Nachteil wird darin gesehen, daß die Befestigungsbasis des einzelnen Stützfußes am Standfuß relativ klein ist, so daß bei einer auftretenden Kippbelastung große Kräfte auf den Befestigungsbereich des Stützfußes kommen und damit die Gefahr einer Lockerung oder einer Beschädigung des Stützfußes entsteht.

Durch die US-A-4,872,733 ist bereits eine Stützeinrichtung der im Oberbegriff des Anspruches 1 bekannt, bei der zwei bügelartige Stützelemente zwischen einer unter das Gerät geklappten, über dessen Seitenkontur nicht überstehenden Außerbetriebsstellung und einer ausgeklappten, über die Seitenkontur nach Art eines Stützauslegers überstehenden Betriebsstellung schwenkbar an einem Standsockel angeordnet sind. Diese Anordnung ist baulich aufwendig. Außerdem kann das Stützelement nur bei stark gekipptem oder umgelegten Gerät zwischen diesen beiden Stellungen verstellt werden, was die weiter vorne beschriebenen Nachteile hat.

Es ist die Aufgabe der vorliegenden Erfindung, eine Stützeinrichtung der im Oberbegriff des Anspruches 1 genannten Art zu schaffen, die ohne ein Anheben bzw. Kippen des Gerätes montiert bzw. demontiert werden kann, und die einfach im Aufbau sowie preiswert in der Herstellung ist.

Diese Aufgabe ist erfindungsgemäß durch die Merkmale des Anspruches 1 gelöst. Der Halteabschnitt kann bei stehendem Gerät so unter dieses geschoben werden, daß die beiden Arme sich beidseitig an einen zugeordneten Standfuß anlegen. In der endgültigen Betriebsstellung liegen die Anschlagflächen des Halteabschnittes an den Gegenflächen des Standfußes an und fixieren den Halteteil am Standfuß in einer Richtung senkrecht zur Bodenfläche. Der Stützausleger steht dann beispielsweise über die seitlichen Begrenzungen des Gerätes über, und zwar so weit, daß die Forderungen an die Standsicherheit bzw. die die Standsicherheit definierenden Prüfkriterien erfüllt sind. Die Demontage des Stützelementes erfolgt in umgekehrter Richtung, indem dieses bei stehendem Gerät unter diesem herausgezogen wird.

Das Stützelement kann in seiner Form und in seinem Aufbau sehr einfach und damit sehr preiswert sein, wie anhand eines Ausführungsbeispieles noch genauer beschrieben wird.

Um die Verbindung der Stützelemente mit den zugeordneten Standfüßen weiter zu verbessern, ist erfindungsgemäß vorgesehen, daß die Arme an ihren Enden jeweils mit Einrichtungen zum Kuppeln derselben mit den Armen eines zweiten, einem zweiten Standfuß zugeordneten Stützelementes versehen sind. Damit ist jedes Stützelement nicht nur an dem ihm zugeordneten Standfuß befestigt, sondern über die Kupplungseinrichtungen und das zweite Stützelement auch mit dem zweiten Standfuß verbunden, so daß sich eine große, die Haltekräfte reduzierende Befestigungsbasis ergibt. Damit ist die Gefahr einer Lockerung oder einer Beschädigung des Stützelementes bei einem auf das Gerät wirkenden Kippmoment weitgehend ausgeschlossen.

Um zwei Stützelemente miteinander zu verbinden, ist erfindungsgemäß an einem Arm jedes Stützelementes ein elastischer Schnapphaken und an dem anderen Arm eine Rastausnehmung zur Aufnahme eines Schnapphakens ausgebildet; beim Kuppeln wird jeweils der Schnapphaken eines Stützelementes mit der Rastausnehmung des anderen Stützelementes zum Eingriff gebracht.

In weiterer Ausgestaltung der Erfindung ist vorgesehen, daß an einem Arm des Stützelementes ein in Längsrichtung des Armes ausgerichteter Zentrierzapfen und an dem jeweils anderen Arm eine in Längsrichtung dieses Armes ausgerichtete Zentrierausnehmung zur Aufnahme eines Zentrierzapfens ausgebildet ist. Beim Zusammenstecken zweier Stützelemente werden die Zentrierzapfen von den Zentrierausnehmungen eingefangen, so daß die beiden Stützelemente exakt zueinander ausgerichtet werden.

Weiterhin ist erfindungsgemäß vorgesehen, daß ein Arm des Stützelementes eine derartige Länge hat, daß er bei der Betriebsstellung über den zugeordneten Standfuß übersteht, wobei der jeweils andere Arm eine demgegenüber geringere Länge hat. Damit wird die Montage des Stützelementes erheblich erleichtert, da es nicht erforderlich ist, den zugeordneten Standfuß gleichzeitig mit beiden Armen einzufangen; vielmehr kann das Stützelement beispielsweise außermittig zum Standfuß an diesen herangeführt und dann seitlich bewegt werden, bis der längere Arm am Standfuß anliegt. Dadurch ist das Stützelement zum Standfuß exakt ausgerichtet und kann nun durch Längsverschiebung am Standfuß entlang in seine Betriebsstellung gebracht werden. Der zweite Arm muß eine gegenüber dem ersten Arm geringere Länge haben, weil er mit dem jeweils längeren Arm des zweiten Stützelementes zusammenwirkt.

Der Halteabschnitt hat gemäß einer Ausgestaltung der Erfindung eine dem Bodenabstand des Gerätes entsprechende vertikale Dicke. Dadurch sitzt im wesentlichen der Boden des Gerätes direkt auf dem Stützelement und dieses auf der Bodenfläche auf, so daß auch dadurch die Standsicherheit verbessert wird.

Um zusätzlich die Rutschsicherheit eines derartig abgestützten Gerätes zu verbessern, ist erfindungsgemäß vorgesehen, daß die Auflagefläche der Stützelemente und/oder des Verbindungsstückes mit einem Reibbelag versehen ist.

Gemäß einer anderen Ausgestaltung der Erfindung hat das Stützelement in seiner Betriebsstellung einen geringen Abstand von der Bodenfläche; dadurch wird erreicht, daß beispielsweise ein Gerät mit als Rollenfüßen ausgebildeten Standfüßen auch mit montierter Stützeinrichtung verfahren werden kann, wobei auch geringe Unebenheiten nicht stören.

In weiterer Ausgestaltung der Erfindung ist vorgesehen, daß die Einrichtung zum Kuppeln der Arme zweier Stützelemente Federmittel umfaßt, die beim Kuppeln der Stützelemente gegen die Richtung der Kupplungsbewegung vorgespannt werden. Durch diese Vorspannkraft werden die beiden gekuppelten Stützelemente nach dem Lösen der Schnapphaken so weit auseinandergedrückt, daß nach Loslassen der Schnapphaken diese nicht mehr in die zugeordneten Aufnahme einrasten können. Dadurch bleiben die Kupplungseinrichtungen gelöst und die Stützelemente können in einfacher Weise von den zugeordneten Standfüßen entfernt werden.

In einer weiteren Ausgestaltung der Erfindung umfaßt die Stützeinrichtung auch ein Verbindungsstück zum Verbinden zweier Stützelemente; dieses Verbindungsstück besteht im wesentlichen aus einer Mittelplatte und zwei an dieser angeordnete, in entgegengesetzte Richtungen ausgerichtete, je einem Halteabschnitt entsprechende Anschlußteile. Das erfindunggemäße Verbindungsstück bietet die Möglichkeit, zwei nebeneinander aufzustellende Geräte nicht lediglich einzeln abzustützen, sondern diese zusätzlich miteinander zu verbinden, womit die Standsicherheit jedes einzelnen Gerätes weiter verbessert wird. Außerdem gewährleistet das Verbindungsstück auch, daß ein bestimmter, für eine eventuelle Kühlung der Geräte erforderlicher Mindestabstand zwischen zwei Geräten nicht unterschritten wird.

Weitere Einzelheiten, Vorteile und Merkmale ergeben sich aus den Patentansprüchen, der folgenden Beschreibung und der Zeichnung, auf die bezüglich der Offenbarung aller nicht im Text beschriebenen Einzelheiten ausdrücklich verwiesen wird. In der Zeichnung sind Ausführungsbeispiele der Erfindung dargestellt, die im folgenden beschrieben werden. Es zeigen:
- Fig. 1: eine Seitenansicht eines auf einer Bodenfläche stehenden Gerätes sowie zwei Stützelemente im demontierten Zustand;
- Fig. 2: eine Draufsicht auf eine Anordnung gemäß der Figur 1;
- Fig. 3: zwei Stützelemente und ein Verbindungsstück im demontierten Zustand in einer Draufsicht;
- Fig. 4: zwei Stützelemente und ein Verbindungsstück im montieren Zustand in einer Draufsicht;
- Fig. 5: zwei Stützelemente im montierten Zustand in einer Draufsicht, sowie ein Verfahren zum Lösen der Stützelemente;

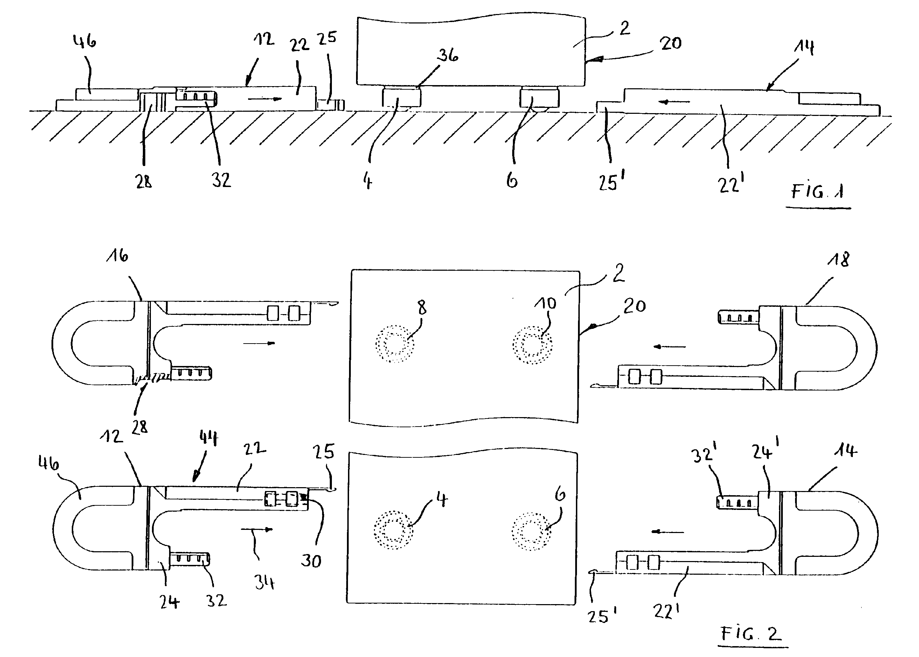

Das in Figur 1 in einer Seitenansicht dargestellte Gerät 2 steht auf mehreren Standfüßen, von denen in der Figur 1 nur die beiden nebeneinander angeordneten Standfüße 4 und 6 zu sehen sind. Diese sind beispielsweise bekannte Kugelrollenfüße.

Figur 2 zeigt das Gerät 2 in einer Draufsicht. Wie zu erkennen ist, hat es vier Standfüße 4, 6, 8, 10. Um die Standsicherheit des Gerätes 2 zu erhöhen, können den Standfüßen 4 bis 10 Stützelemente 12 bis 18 zugeordnet werden.

Figur 2 zeigt den Fall, daß das Gerät 2 nach allen Richtungen freistehend aufgestellt wird. Wenn das Gerät 2 jedoch beispielsweise mit seiner in den Figuren 1 und 2 rechten Seitenwand 20 an einer Wand steht, so daß es nur gegen ein Kippen nach links gesichert werden muß, kann es genügen, nur an den Standfüßen 4 und 8 die Stützelement 12 bzw. 16 anzubringen.

Die Stützelemente 12 bis 18 sind gleich aufgebaut. Dieser Aufbau wird im folgenden anhand der Figur 2 beschrieben. Das Stützelement 12 ist als im wesentlichen U-förmiger Bügel mit zwei Armen 22, 24 ausgebildet. Der in der Figur 2 obere Arm 22 trägt an seinem Ende einen elastischen Schnapphaken 25, welcher elastisch auslenkbar ist. Der in Figur 2 untere Arm 24 hat an seiner Außenseite eine Rastausnehmung 28, in die der Schnapphaken eines mit dem Stützelement 12 zu kuppelnden zweiten Stützelementes (beispielsweise des Stützelementes 14 in Figur 2) einrasten kann.

An dem in Figur 2 oberen Arm 22 ist eine in dessen Längsrichtung ausgerichtete Zentrierausnehmung 30 ausgebildet, die in Figur 2 gestrichelt dargestellt ist. Der in Figur 2 untere Arm 24 trägt einen ebenfalls in Längsrichtung ausgerichteten Zentrierzapfen 32, dessen Außenprofil dem Innenprofil der Zentrierausnehmung 30 entspricht.

Wie insbesondere Figur 2 in Verbindung mit Figur 5 erkennen läßt, wird zur Montage der Stützeinrichtung beispielsweise das Stützelement 12 in Richtung des Pfeiles 34 auf den Standfuß 4 aufgeschoben, wobei die beiden Arme 22, 24 seitlich zur Anlage am Standfuß 4 kommen. Gleichzeitig wird das Stützelement 14 in der gleichen Weise auf den Standfuß 6 aufgeschoben. Dabei tritt der Zentrierzapfen 32 des Stützelementes 12 in eine nicht dargestellte, am gegenüberliegenden Arm 22′ des Stützelementes 14 ausgebildete Zentrierausnehmung ein.

Gleichzeitig tritt der am oberen Arm 24′ des Stützelementes 14 angeordnete Zentrierzapfen 32′ in die am gegenüberliegenden Arm 22 des Stützelementes 12 ausgebildete Zentrierausnehmung 30 ein. Wenn beide Stützelemente 12, 14 die in Figur 5 dargestellte Betriebsstellung einnehmen, ist der Schnapphaken 25 des Stützelementes 12 in eine entsprechende Rastausnehmung des Stützelementes 14 eingerastet, während der Schnapphaken 25′ des Stützelementes 14 in die Rastausnehmung 28 des Stützelementes 12 eingreift.

Wie die Figuren erkennen lassen, haben die Standfüße 4 bis 10 eine im wesentlichen zylindrische Form. Sie sind in ihrem oberen Bereich mit einer Umfangsnut 36 (siehe Figur 1) versehen. Wie Figur 2 erkennen läßt, sind die beiden Arme 22, 24 des Stützelementes 12 über einen Verbindungsabschnitt miteinander verbunden, welcher eine an die Außenkontur der Standfüße angepaßte, im vorliegenden Fall ebenfalls zylindrische Anlagefläche hat. An dieser Anlageflache ist ein sich in Umfangsrichtung erstreckender Innenflansch ausgebildet, welcher in die Umfangsnut 36 des Standfußes eingreift und damit das Stützelement gegenüber dem Standfuß in vertikaler Richtung fixiert. Der Standfuß 4 ragt vorzugsweise um ein geringes Maß über die Unterseite des montierten Stützelementes 12 hinaus, so daß dieses ein Verfahren des Gerätes nicht behindert; es kommt dann erst bei einem geringen Kippwinkel des Gerätes zur Anlage am Boden und übernimmt dann seine Stützfunktion. Die in Figur 5 dargestellten Stützelemente 12 und 14 sind nach der Montage miteinander und mit den Standfüßen 4 bzw. 6 fest verbunden.

Die Arme 22, 24 sowie der Verbindungsabschnitt 38 bilden zusammen den Halteabschnitt 44 des Stützelementes 12. Dieser ist einstückig mit einem Stützausleger 46 verbunden, welcher seitlich über die Kontur des Gerätes 2 übersteht und damit dessen Stützbasis vergrößert.

Die Stützelemente 12 bis 18 sind gleich aufgebaut. Wie insbesondere am Beispiel des Stützelementes 12 in Figur 2 dargestellt ist, ist der in dieser Figur obere Arm 22 so lang, daß er bei der Betriebsstellung des Stützelementes über den zugeordneten Standfuß 4 übersteht, während der untere Arm 24 demgegenüber kürzer ist. Der obere Arm 22 wirkt mit einem kurzen Arm 24′ des zweiten Stützelementes 14 zusammen, während der kurze Arm 24 mit dem längeren Arm 22′ des Stützelementes 14 zusammenwirkt. Diese Ausbildung erleichtert die Montage des Stützelementes, da es anders als bei einer Ausbildung mit gleich langen Armen nicht erforderlich ist, den jeweils zugeordneten Standfuß exakt einzufangen. Vielmehr kann beispielsweise der lange Arm 22 des Stützelementes 12 zunächst in einfacher Weise an den zugeordneten Standfuß 4 angelegt und dann an diesem entlang verschoben werden, bis das Stützelement seine Betriebsstellung einnimmt.

Zur Demontage der in Figur 5 dargestellten Stützeinrichtung werden die beiden Schnapphaken 25 bzw. 25′ beispielsweise mittels zweier Schraubendreher aus dem zugeordneten Rastausnehmungen ausgehoben. Zur Erleichterung der Demontage sind beispielsweise die Enden der Zentrierzapfen 32 bzw. 32′ federnd ausgebildet derart, daß sie beim Kuppeln der Stützelemente 12 bzw. 14 zusammengedrückt werden und eine in Löserichtung wirkende Vorspannkraft erzeugen. Diese Vorspannkraft bewirkt, daß nach dem Ausheben der Schnapphaken 25, 25′ die Stützelemente 12 und 14 selbsttätig auseinandergedrückt werden, so daß auch nach Loslassen der Schnapphaken diese nicht mehr einrasten können. Die Stützelemente 12, 14 können sodann ohne weiteres nach außen von den zugeordneten Standfüßen abgezogen werden.

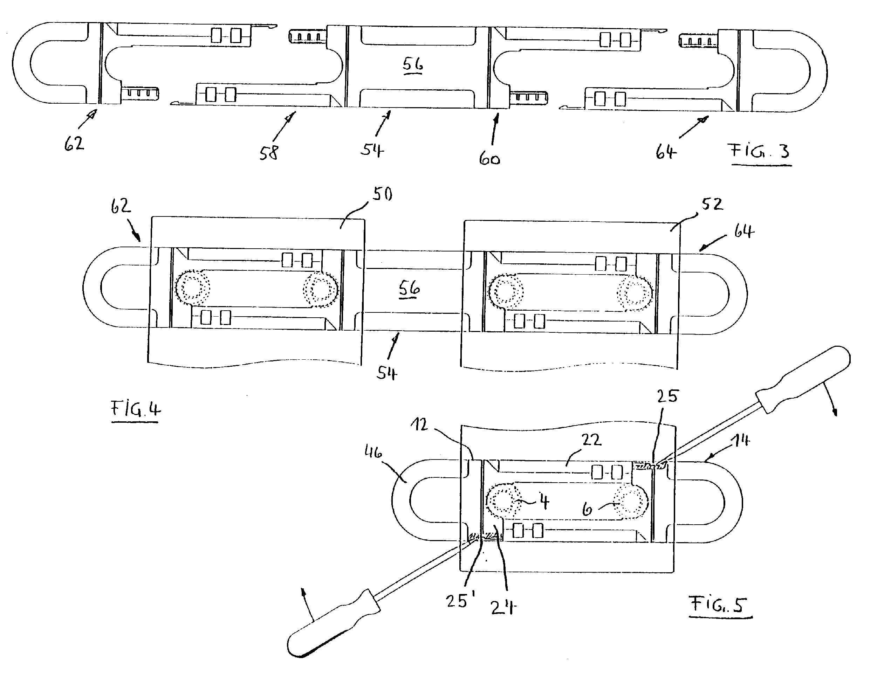

Die Figuren 3 und 4 zeigen eine Variante der Erfindung, die es erlaubt, zwei Geräte 50, 52 sicher abzustützen und gleichzeitig miteinander zu verbinden. Dazu ist ein Verbindungsstück 54 vorgesehen, welches aus einer Mittelplatte 56 besteht, an welcher zwei in entgegengesetzte Richtungen ausgerichtete Anschlußteile 58, 60 angeordnet sind. Wie ohne weiteres erkennbar ist, entsprechen diese Anschlußteile 58, 60 jeweils den Halteabschnitten 44 der Stützelemente, so daß sie nicht im einzelnen beschrieben werden müssen. Die Anschlußteile 58 bzw. 60 sind deshalb ohne weiteres mit den Stützelementen 62 bzw. 64 in der bereits beschriebenen Weise kuppelbar. Die Mittelplatte 56 hat dabei einerseits die Funktion eines Stützauslegers, andererseits eines Verbindungsstückes bzw. Abstandhalters für die beiden Stützelemente 62 bzw. 64 und damit für die zu verbindenden Geräte 50 und 52.

Die Figur 4 zeigt das Verbindungsstück 54 sowie die beiden Stützelemente 62 bzw. 64 in einem miteinander gekuppelten sowie mit Standfüßen zugeordneter Geräte 50 bzw. 52 verbundenen Zustand. Wegen der Verbindung der beiden Geräte 50, 52 miteinander ergibt sich eine ausgezeichnete Standsicherheit der Gesamtanordnung. Außerdem wird durch das Verbindungsstück 54 sichergestellt, daß die beiden Geräte 50, 52 einen vorgegebenen Abstand zueinander haben.

Wie nicht näher dargestellt zu werden braucht, können die Stützelemente sowie das Verbindungsstück an ihrer auf der Bodenfläche aufliegenden Auflagefläche mit einem Reibbelag versehen sein, um die Rutschfestigkeit der Geräte bzw. der Geräteanordnungen zu verbessern.

## Patentansprüche

1. Stützeinrichtung für ein auf einer Standfußanordnung mit einem Abstand zur Bodenfläche stehendes Gerät (2), bestehend aus wenigstens einem Stützelement (12), welches zwischen einer Außerbetriebsstellung sowie einer Betriebsstellung verstellbar ist, bei welcher es nach Art eines Stützauslegers von der Standfußanordnung (4) aus über die Seitenkontur des Gerätes (2) nach außen übersteht, dadurch **gekennzeichnet,** daß das Stützelement (12) einen separaten, in der Betriebsstellung unter ein abzustützendes Gerät (2) greifenden und mit einem zugeordneten Standfuß (4) des Gerätes (2) lösbar verbundenen Halteabschnitt (44) und einen daran angeordneten, über die Seitenkontur des Gerätes (2) überstehenden Stützausleger umfaßt, daß der Halteabschnitt (44) als im wesentlichen U-förmiger Bügel mit zwei in der Montagestellung seitlich an dem Standfuß (4) anliegenden Armen (22, 24) ausgebildet ist, und daß am Halteabschnitt (44) mit Gegenflächen des Standfußes (4) zusammenwirkende Anschlagflächen für eine Fixierung des Halteabschnittes (44) am Standfuß (4) in einer Richtung senkrecht zur Bodenfläche vorgesehen sind.

2. Stützeinrichtung nach Anspruch 1, dadurch **gekennzeichnet**, daß die Arme (22, 24) an ihren Enden jeweils mit Einrichtungen (25, 28) zum Kuppeln derselben mit den Armen (24′, 22′) eines zweiten Stützelementes (14) versehen sind.

3. Stützeinrichtung nach Anspruch 1, dadurch **gekennzeichnet**, daß an einem Arm (22) des Stützelementes (12) ein elastischer Schnapphaken (25) und an dem anderen Arm (24) eine Rastausnehmung (28) zur Aufnahme eines Schnapphakens (25′) ausgebildet ist.

4. Stützeinrichtung nach Anspruch 2 oder 3, dadurch **gekennzeichnet**, daß an einem Arm (24) des Stützelementes (12) ein in Längsrichtung des Armes ausgerichteter Zentrierzapfen (32) und an dem jeweils anderen Arm (22) eine in Längsrichtung dieses Armes ausgerichtete Zentrierausnehmung (30) zur Aufnahme eines Zentrierzapfens (32′) ausgebildet ist.

5. Stützeinrichtung nach einem der Ansprüche 1 bis 4, dadurch **gekennzeichnet**, daß ein Arm (22) des Stützelementes (12) eine Länge hat derart, daß er in der Betriebsstellung über den zugeordneten Standfuß (4) übersteht, und daß der jeweils andere Arm (24) eine demgegenüber geringere Länge hat.

6. Stützeinrichtung nach einem der Ansprüche 1 bis 5, dadurch **gekennzeichnet,** daß der Halteabschnitt (44) eine dem Bodenabstand des Gerätes (2) entsprechende Vertikaldicke hat.

7. Stützeinrichtung nach einem der Ansprüche 2 bis 6, dadurch **gekennzeichnet,** daß die Einrichtung (30, 32) zum Kuppeln der Arme zweier Stützelemente (12, 14) Federmittel umfaßt, die beim Kuppeln der Stützelemente gegen die Richtung der Kupplungsbewegung vorgespannt werden.

8. Stützeinrichtung nach einem der Ansprüche 1 bis 7, dadurch **gekennzeichnet**, daß die beiden Arme (22, 24) des Stützelementes (12) durch einen in seiner Form der Außenform eines Standfußes (4) angepaßten Verbindungsabschnitt miteinander verbunden sind.

9. Stützeinrichtung nach Anspruch 8, dadurch **gekennzeichnet**, daß der Verbindungsabschnitt an seiner zur Anlage am Standfuß (4) bestimmten Anlagefläche wenigstens einen Fixiervorsprung für einen Eingriff in eine am Standfuß (2) ausgebildete Fixierausnehmung (36) hat und umgekehrt.

10. Stützeinrichtung nach Anspruch 9, dadurch **gekennzeichnet**, daß der Verbindungsabschnitt eine halbzylindrische Anlagefläche hat und daß aus der Anlagefläche ein in Umfangsrichtung sich erstreckender Innenflansch für den Eingriff in eine am Standfuß (4) ausgebildete Umfangsnut (36) vorspringt.

11. Stützeinrichtung nach einem der Ansprüche 2 bis 10, dadurch**gekennzeichnet**, daß sie ein Verbindungsstück (54) zum Verbinden zweier Stützelemente (62, 64) umfaßt, welches aus einer Mittelplatte (56) und zwei an dieser angeordnete, in entgegengesetzte Richtungen ausgerichtete, je einem Halteabschnitt eines Stützelementes entsprechende Anschlußteile (58, 60) gebildet ist.

12. Stützeinrichtung nach einem der Ansprüche 1 bis 11, dadurch **gekennzeichnet,** daß die Auflagefläche der Stützelemente (62, 64) und/oder des Verbindungsstückes (54) mit einem Reibbelag versehen ist.

13. Stützeinrichtung nach einem der Ansprüche 1 bis 5 und 7 bis 12, dadurch **gekennzeichnet**, daß die Stützelemente (62, 64) und das Verbindungsstück (54) eine gegenüber dem Bodenabstand des Gerätes geringere Dicke hat und im montierten Zustand einen geringfügigen Abstand von der Bodenfläche haben.

## Claims

1. Supporting device for a machine (2) standing on a standing foot arrangement at a distance to the floor surface, consisting of at least one supporting element (12), which is adjustable between a non-operating position and an operating position in which it protrudes outwards, in the style of a supporting bracket, from the standing foot arrangement (4) over the lateral contour of the machine (2), characterized in that the supporting element (12) comprises a separate holding section (44), which reaches, in the operating position, beneath a machine (2) to be supported and is detachably connected to an assigned standing foot (4) of the machine (2), and a supporting bracket disposed thereon, which protrudes over the lateral contour of the machine (2), in that the holding section (44) is configured as an essentially U-shaped bow having two arms (22, 24) which bear, in the fitted position, laterally againet the standing foot (4), and in that on the holding section (44) there are provided, in a direction perpendicular to the floor surface, stop faces, interacting with counter-faces of the standing foot (4), for fixing the holding section (44) to the standing foot (4).

2. Supporting device according to Claim 1, characterized in that the arms (22, 24) are respectively provided, at their ends, with devices (25, 28) for coupling the said arms to the arme (24′, 22′) of a second supporting element (14).

3. Supporting device according to Claim 1, characterized in that there is configured on one arm (22) of the supporting element (12) an elastic snap hook (25) and on the other arm (24) a latch recess (28) for the reception of a snap hook (25′).

4. Supporting device according to Claim 2 or 3, characterized in that on one arm (24) of the supporting element (12) there is configured a centring spigot (32) aligned in the longitudinal direction of the arm and on the respective other arm (22) a centring recess (30), aligned in the longitudinal direction of this arm, for the reception of a centring spigot (32′).

5. Supporting device according to one of Claims 1 to 4, characterized in that one arm (22) of the supporting element (12) is of such a length that, in the operating position, it protrudes over the assigned standing foot (4) and in that the respective other arm (24) has a comparatively shorter length.

6. Supporting device according to one of Claims 1 to 5, characterized in that the holding section (44) has a vertical thickness corresponding to the distance of the machine (2) from the floor.

7. Supporting device according to one of Claims 2 to 6, characterized in that the device (30, 32) for coupling the arms of two supporting elements (12, 14) comprises spring means which, upon the coupling of the supporting elements, are pre-tensioned counter to the direction of the coupling motion.

8. Supporting device according to one of Claime 1 to 7, characterized in that the two arms (22, 24) of the supporting element (12) are interconnected by a connecting section matched in its shape to the outer form of a standing foot (4).

9. Supporting device according to Claim 8, characterized in that the connecting section has, on its contact surface intended for contact againet the standing foot (4), at least one fixing projection for engagement into a fixing recees (36) configured on the standing foot (4), and vice versa.

10. Supporting device according to Claim 9, characterized in that the connecting section has a semi-cylindrical contact surface and in that from the contact surface there projects an inner flange, extending in the peripheral direction, for engagement in a peripheral groove (36) configured on the standing foot (4).

11. Supporting device according to one of Claims 2 to 10, characterized in that it comprises a connecting piece (54) for connecting two supporting elements (62, 64), which connecting piece is formed from a centre plate (56) and two joining parts (58, 60) which are disposed on the said centre plate, are aligned in opposite directions and correspond to a respective holding section of a supporting element.

12. Supporting device according to one of Claims 1 to 11, characterized in that the bearing surface of the supporting elements (62, 64) and/or of the connecting piece (54) is provided with a friction covering.

13. Supporting device according to one of Claims 1 to 5 and 7 to 12, characterized in that the supporting elements (62, 64) and the connecting piece (54) have a smaller thickness in relation to the distance of the machine from the floor and, in the fitted state, are at a slight distance from the floor surface.

## Revendications

1. Dispositif de support pour un appareil (2) monté sur un piétement, à distance de la surface du sol, constitué par au moins un élément de support (12), qui est déplaçable entre une position hors-service et une position de service, dans laquelle il fait saillie extérieurement à la manière d'un bras en console de support à partir du piétement (4), au-delà du contour latéral de l'appareil (2), caractérisé par le fait que l'élément de support (12) comprend une section séparée de retenue (44), qui, dans la position de service, s'engage sous un appareil (2) à supporter et est reliée de façon amovible à un piétement associé (4) de l'appareil (2), et un bras en console de support, qui est disposé sur cette section de retenue et fait saillie au-delà du contour latéral de l'appareil (2), que la section de retenue (44) est réalisée sous la forme d'un étrier sensiblement en forme de U comportant deux bras (22, 24) qui, dans la position de montage, s'appliquent latéralement contre le piétement (4) et que sur la section de retenue (44) sont prévues des surfaces de butée qui coopèrent avec des surfaces antagonistes du piétement (4) et sont utilisées pour la fixation de la section de retenue (44) sur le piétement (4), dans une direction perpendiculaire à la surface du sol.

2. Dispositif de support suivant la revendication 1, caractérisé par le fait que les bras (22, 24) comportent, au niveau de leurs extrémités, respectivement des dispositifs (25, 28) pour l'accouplement de ces extrémités aux bras (24′, 22′) d'un second élément de support (14).

3. Dispositif de support suivant la revendication 1, caractérisé par le fait qu'un crochet d'encliquetage élastique (25) est formé sur un bras (22) de l'élément de support (12) et qu'un logement d'encliquetage (28) servant à loger un crochet d'encliquetage (25′) est prévu sur l'autre bras (24).

4. Dispositif de support suivant la revendication 2 ou 3, caractérisé par le fait que sur un bras (24) de l'élément de support (12) est formé un téton de centrage (32) aligné dans la direction longitudinale de ce bras et que sur l'autre bras (22) est formé un évidement de centrage (30), qui est aligné dans la direction longitudinale de ce bras et sert à loger un téton de centrage (32′).

5. Dispositif de support suivant l'une des revendications 1 à 4, caractérisé par le fait qu'un bras (22) de l'élément de support (12) possède une longueur telle, que dans la position de service, il fait saillie au-delà du piétement associé (4), et que l'autre bras respectif (24) possède une longueur comparativement inférieure.

6. Dispositif de support suivant l'une des revendications 1 à 5, caractérisé par le fait que la section de retenue (44) possède une épaisseur verticale qui correspond à la distance du fond de l'appareil (2).

7. Dispositif de support suivant l'une des revendications 2 à 6, caractérisé par le fait que le dispositif (30, 32) comporte, pour l'accouplement des bras de deux éléments de support (12, 14), des moyens à ressorts, qui, lors de l'accouplement des éléments de support, sont précontraints à l'encontre du sens du déplacement d'accouplement.

8. Dispositif de support suivant l'une des revendications 1 à 7, caractérisé par le fait que les deux bras (22, 24) de l'élément de support (12) sont reliés entre eux par l'intermédiaire d'une section de liaison, dont la forme est adaptée à la forme extérieure d'un piétement (4).

9. Dispositif de support suivant la revendication 8, caractérisé par le fait que la section de liaison possède, au niveau de sa surface d'application destinée à s'appliquer sur le piétement (4), au moins un appendice saillant de fixation, destiné à s'engager dans un logement de fixation (36) formé dans le piétement (2), et inversement.

10. Dispositif de support suivant la revendication 9, caractérisé par le fait que la section de liaison possède une surface d'application semi-cylindrique et qu'une bride intérieure, qui s'étend dans la direction circonférentielle et est destinée à s'engager dans une rainure circonférentielle (36) ménagée dans le piétement (4), fait saillie hors de la surface d'application.

11. Dispositif de support suivant l'une des revendications 2 à 10, caractérisé par le fait qu'il comporte un élément de liaison une servant à relier deux éléments de support (62, 64) et qui est constitué par une plaque médiane (56) et par deux éléments de raccordement (58, 60) qui sont disposés sur cette plaque, sont alignés dans des directions opposées et correspondent respectivement à une section de retenue d'un élément de support.

12. Dispositif de support suivant l'une des revendications 1 à 11, caractérisé par le fait que a surface d'appui des éléments de support (62, 64) et/ou de l'élément de liaison (54) comporte une garniture de friction.

13. Dispositif de support suivant l'une des revendications 1 à 5 et 7 à 12, caractérisé par le fait que les éléments de support (62, 64) et l'élément de liaison (54) possèdent une épaisseur inférieure à la distance du fond de l'appareil et, à l'état monté, sont situés à une faible distance de la surface du fond.
